Europäisches Patentamt

European Patent Office

Office européen des brevets

(19)

(11) Veröffentlichungsnummer : **0 418 571 B1**

# (12) EUROPÄISCHE PATENTSCHRIFT

(45) Veröffentlichungstag der Patentschrift :
22.07.92 Patentblatt 92/30

(51) Int. Cl.⁵ : **C02F 7/00, C02F 3/20**

(21) Anmeldenummer : **90115956.6**

(22) Anmeldetag : **21.08.90**

(54) **Anordnung zur Reinigung und Belüftung von offenen Gewässern.**

(30) Priorität : **22.09.89 DE 3931617**

(43) Veröffentlichungstag der Anmeldung :
**27.03.91 Patentblatt 91/13**

(45) Bekanntmachung des Hinweises auf die
Patenterteilung :
**22.07.92 Patentblatt 92/30**

(84) Benannte Vertragsstaaten :
**AT CH DE ES FR GB IT LI NL SE**

(56) Entgegenhaltungen :
DE-A- 3 811 962
FR-A- 2 491 773
GB-A- 1 393 028

(73) Patentinhaber : **IEG Industrie-Engineering
GmbH
Lilienthalstrasse 6
W-7410 Reutlingen 11-Betzingen (DE)**

(72) Erfinder : **Bernhardt, Bruno
Burgstrasse 85
W-7410 Reutlingen (DE)**

(74) Vertreter : **Möbus, Rudolf, Dipl.-Ing.
Hindenburgstrasse 65
W-7410 Reutlingen (DE)**

**Beschreibung**

Die Erfindung betrifft eine Anordnung zur Reinigung und Belüftung von offenen Gewässern.

Zur Reinigung grundwasserführender Bodenschichten sind Anordnungen vorgeschlagen worden, bei welchen durch Unterdruckbildung Luft oder Gase in das in einem Brunnenschacht oder Gehäuse gesammelte Grundwasser eingeleitet werden (DE-A 36 25 488, DE-C 38 05 200, DE-C 38 11 962).

Der Erfindung liegt die Aufgabe zugrunde, ausgehend von den Erfahrungen bei der Grundwasserreinigung eine Anordnung zu schaffen, die zur Reinigung und Belüftung von offenen Gewässern eingesetzt werden kann.

Die gestellte Aufgabe wird mit einer Anordnung der eingangs genannten Art erfindungsgemäß dadurch gelöst, daß sie ein Schwimmergehäuse aufweist, das teilweise über den Wasserspiegel herausragt, in dessen unterem Bereich mindestens eine Öffnung zum Eintritt des Wassers vorhanden ist und in dessen oberem Bereich mittels eines Ventilators ein Unterdruck erzeugbar ist, und das dadurch gekennzeichnet ist, daß innerhalb des Schwimmgehäuses ein ihm gegenüber höhenverstellbarer Luftaufnahmeraum ausgebildet ist, der nach oben durch eine unterhalb des sich im Schwimmgehäuse einstellenden Wasserspiegels liegende Düsenplatte begrenzt ist und in welchem eine Luft- oder andere Gaszuleitung endet.

Der innerhalb des Schwimmgehäuses höhenverstellbare Teil, der den nach oben durch eine Düsenplatte begrenzten Luftaufnahmeraum aufweist, bildet den eigentlichen Reinigungsund Belüftungsteil der Anordnung. Die Höhenlage der Düsenplatte wird so eingestellt, daß in dem Luftaufnahmeraum der Wasserdruck geringer ist als der atmosphärische Druck, so daß bei der Unterdruckbildung im Schwimmgehäuse Zuluft in die Luftaufnahmekammer nachgesaugt wird, die aus der Luftaufnahmekammer durch die Öffnungen der Düsenplatte hindurch in Form von feinen Blasen in den darüber befindlichen Wasserraum aufsteigt. Anstelle von Luft kann auch ein besonderes Behandlungsgas Verwendung finden. Auch dieses Behandlungsgas sollte nach Möglichkeit unter Atmosphärendruck in den Luftaufnahmeraum gelangen, um einen optimalen Wirkungsgrad der gesamten Anordnung zu erzielen. Durch die aufsteigenden Gasbläschen wird eine Pumpwirkung in dem gasdurchströmten Wasserbereich innerhalb des Schwimmgehäuses erzielt, die zu einer Wasserumwälzung im Schwimmgehäuse führt.

Durch die Wahl der Anordnung der Wassereintrittsöffnungen und der Wasseraustrittsöffnungen im Schwimmgehäuse läßt sich ein einen optimalen Wirkungsgrad der Anordnung erbringender ruhiger laminarer Durchstrom von Wasser durch das Schwimmgehäuse erzielen. Hierbei läßt sich das Durchströmen des Wassers durch den Reinigungsbereich des Schwimmgehäuses dadurch begünstigen, daß oberhalb der Düsenplatte mit Abstand von und konzentrisch zu ihr ein Leitring für das im Schwimmgehäuse befindliche Wasser angeordnet wird, oder daß die Öffnungen zur Zuleitung von Wasser in das Innere des Schwimmgehäuses als Düsenrohre ausgebildet werden, die durch den Luftaufnahmeraum und die Düsenplatte hindurchgeführt sind. Der Leitring erzwingt ein Hochsteigen des Wassers im luftdurchströmten, innerhalb des Leitringes angeordneten Bereich und ein Absinken des entgasten und dadurch dichteren Wassers außerhalb des Ringes im Schwimmgehäuse. Eine weitere Begünstigung der Strömung des zu reinigenden und zu belüftenden Wassers durch das Schwimmgehäuse läßt sich durch die Anordnung der Wasseraustrittsöffnungen des Gehäuses radial außerhalb der Wassereintrittsöffnungen und zusätzlich dadurch erzielen, daß an den Wasserauslauföffnungen nach unten in das Gewässer ragende Rohre angeschlossen sind, die mit größerem Abstand vom Boden des Schwimmgehäuses enden, wobei die Abstände unterschiedlich sein können. Dadurch wird erreicht, daß gereinigtes Wasser mit seiner im Schwimmgehäuse erhaltenen Temperatur in Gewässertiefen mit abweichender Temperatur wieder ausgeleitet wird, und durch Temperaturdifferenzen im Wasser zusätzliche Impulse für das Ingangsetzen einer Wasserströmung in Richtung auf die Wassereintrittsöffnungen des Schwimmgehäuses erteilt werden.

Der von der Düsenplatte begrenzte Luftaufnahmeraum kann zur automatischen Höheneinstellung als im Schwimmgehäuse geführter Schwimmkörper ausgebildet sein. Er kann aber auch willkürlich höheneinstellbar angeordnet werden. Für beide Fälle kann die Düsenplatte zweckmäßig eine zentrale Öffnung aufweisen, an welche für die Gaszuleitung ein in der Deckenwandung des Schwimmgehäuses geführtes Rohr angeschlossen ist und gleichzeitig für eine Führung des höhenverstellbaren Luftaufnahmeraumes im Schwimmgehäuse sorgt. Eine zusätzliche Führung des höhenverstellbaren Luftaufnahmeraumes kann im Boden des Schwimmgehäuses erfolgen. Insbesondere kann dies bei einer Ausführungsform vorgenommen werden, bei welcher der Luftaufnahmeraum im oberen Teil eines Rohrkörpers ausgebildet ist, der unten offen ist und in dessen unterem Teil ein Filtereinsatz angeordnet ist, den das in das Schwimmgehäuse aufsteigende Wasser zuerst durchströmen muß. Hierzu kann das Schwimmgehäuse in seinem Boden zweckmäßig eine zentrale Öffnung für die Führung des Rohrkörpers aufweisen.

Die gesamte Anordnung kann am Gewässerboden verankert werden. Dadurch ist auch eine Reinigung und Belüftung fließender Gewässer möglich. Der Standort der Anordnung kann dabei beliebig oft gewechselt wer-

2

den, oder es können gleichzeitig mehrere solcher Anordnungen zur gleichmäßigen Anreicherung des Gewässers mit Sauerstoff und zur Entfernung von Verunreinigungen, beispielsweise durch Phosphate, Nitrate oder Pestizide verursachte, eingesetzt werden. Auch können im Schwimmgehäuse dem ausströmenden gereinigten Wasser Stoffe zudosiert werden, die beispielsweise eine Phosphatausfällung begünstigen.

Nachfolgend werden zwei Ausführungsbeispiele erfindungsgemäß ausgebildeter Anordnungen anhand der beiliegenden Zeichnung näher erläutert.

Im einzelnen zeigen:

Fig. 1 einen zentralen vertikalen Querschnitt durch ein erstes Ausführungsbeispiel der Anordnung;

Fig. 2 einen der Fig. 1 entsprechenden zentralen vertikalen Querschnitt durch eine zweite Ausführungsform der Anordnung.

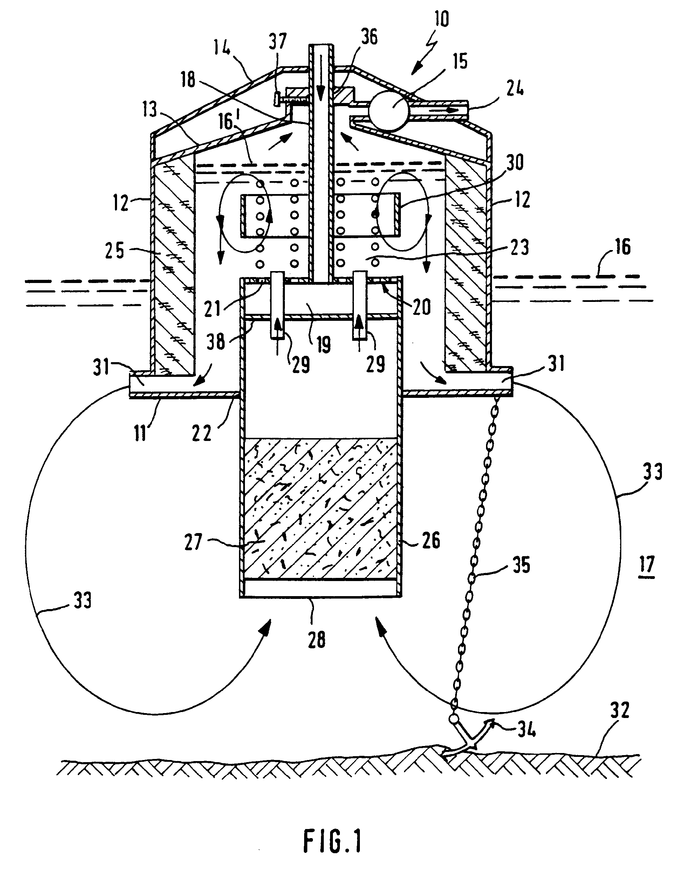

Fig. 1 zeigt ein Schwimmgehäuse 10 mit einem Boden 11, Seitenwandungen 12 und einem oberen, luftdichten Verschlußdeckel 13. Oberhalb des Verschlußdeckels 13 ist eine Schutzglocke 14 angeordnet, die einen Ventilator 15 und weitere, hier nicht dargestellte Einrichtungen, beispielsweise zur Stromversorgung oder zur Abluftfilterung, vor Witterungseinflüssen schützt.

Das Schwimmgehäuse 10 taucht teilweise unter den Wasserspiegel 16 eines hier relativ flachen Gewässers 17 ein. Auf der Innenseite der Seitenwandungen 12 des Schwimmgehäuses 10 sind Schwimmkörper 25 angeordnet, die sicherstellen, daß das Schwimmgehäuse mit einem großen Teil über den Wasserspiegel 16 herausragt. Im Innern des Schwimmgehäuses 10 wird durch den vom Ventilator 15 erzeugten Unterdruck der Wasserspiegel auf ein höheres Niveau 16' als der Wasserspiegel 16 des Gewässers angehoben.

Durch eine zentrale Öffnung 22 im Boden 11 des Schwimmkörpers 10 ist ein Rohrkörper 26 koaxial in das Schwimmgehäuse 10 eingeschoben. Der Rohrkörper 26 ist an seinem inneren Ende mittels einer Düsenplatte 20 verschlossen, welche nach oben einen im Rohrkörper 26 ausgebildeten Luftaufnahmeraum 19 begrenzt. In einer zentralen Öffnung der Düsenplatte 20 endet koaxial ein Rohr 18, das durch eine Öffnung 36 in dem Verschlußdeckel 13 nach außen ragt und durch welches Luft oder andere Gase von außen in den Luftaufnahmeraum 19 nachströmen können. Die Luft oder andere Gase steigen aus dem Luftaufnahmeraum 19 durch Düsenöffnungen 21 der Düsenplatte 20 in Form von feinen Blasen, die in der Zeichnung schematisch angedeutet sind, in den oberhalb der Düsenplatte 20 befindlichen Reinigungs- und Belüftungsbereich 23 der Anordnung auf. Das Nachströmen von Luft in den Luftaufnahmeraum 19 wird durch den Ventilator 15 bewirkt, der im oberen Teil des Schwimmgehäuses 10 einen Unterdruck erzeugt und die aus dem Wasserspiegel 16' austretende Luft absaugt und über einen Ausleitkanal 24 ins Freie ableitet. Der Ausleitkanal 24 kann aber auch zu einer nicht dargestellten Filtereinrichtung führen.

Der Rohrkörper 26 mit dem Luftzufuhrrohr 18 ist im Schwimmgehäuse 10 höhenverstellbar angeordnet und wird in einer gewünschten Höhenlage mittels am Luftzufuhrrohr 18 angreifender Spannschrauben 37 gehalten, von denen eine in Fig. 1 eingezeichnet ist. Im unteren Teil des Rohrkörpers 26 ist ein Filtereinsatz 27 durch die untere freie Öffnung 28 eingebracht. Das in das Schwimmgehäuse 10 hochsteigende Wasser durchläuft zunächst den Filtereinsatz 27 und gelangt dann zu Düsenrohren 29, welche durch den Luftaufnahmeraum 19 hindurchführen und eine untere Begrenzungswandung 38 und die obere Düsenplatte 20 durchstoßen. Das in den Reinigungs- und Belüftungsbereich 23 hochsteigende Wasser wird dort durch die in feinen Blasen aufsteigende Luft mit Sauerstoff versetzt und gleichzeitig von leichtflüchtigen Verunreinigungen befreit. Oberhalb der Düsenplatte 20 ist ein Leitring 30 konzentrisch zum Luftzufuhrrohr 18 angeordnet und über nicht dargestellte Befestigungsstege an diesem befestigt. Das Wasser steigt innerhalb des Leitringes hoch und sinkt außerhalb des Ringes 30 ab, was in der Zeichnung durch Pfeile verdeutlicht ist. Das absinkende Wasser gelangt zu peripheren Wasseraustrittsöffnungen 31, die in der Nähe des Bodens des Schwimmgehäuses 10 ausgebildet sind. Durch den Unterdruck im Schwimmgehäuse 10 kühlt sich das Wasser ab und sinkt daher nach Austritt aus den Öffnungen 31 in Richtung des Gewässergrundes 32 ab und gelangt so teilweise auch wieder in den Ansaugbereich des Rohrkörpers 26. Dadurch bildet sich eine in der Zeichnung durch Pfeile 33 angedeutete Strömung im Gewässer 17 aus, die den Gesamtwasserkreislauf der Anordnung anregt. Die gesamte Anordnung ist mit Hilfe einer Ankerkette 35 und eines Ankers 34 am Gewässergrund 32 lösbar verankert, wodurch ein Einsatz der Anordnung auch bei windiger Witterung oder in strömenden Gewässern möglich ist.

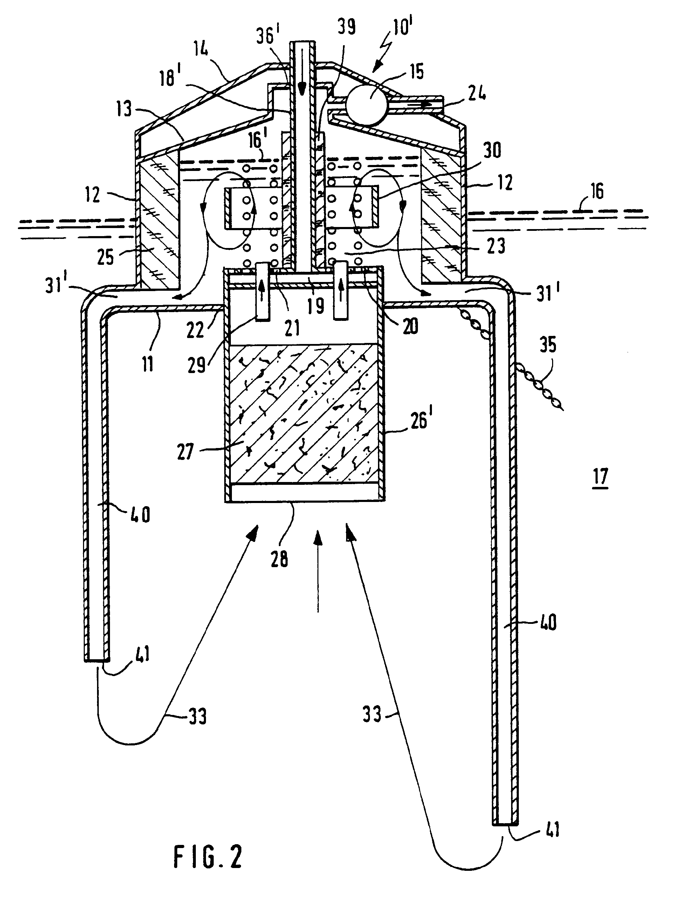

Die in Fig. 2 dargestellte Ausführungsform eines Schwimmgehäuses 10', bei welchem gleiche und unveränderte Teile mit den gleichen und unveränderten Bezugsziffern wie beim Ausführungsbeispiel nach Fig. 1 bezeichnet sind, unterscheidet sich von dem Ausführungsbeispiel nach Fig. 1 insbesondere dadurch, daß der Rohrkörper 26' ebenfalls als Schwimmkörper ausgebildet ist. Zu diesem Zweck ist das Luftzufuhrrohr 18' mit einem Auftriebsmantel 39 versehen, und der Rohrkörper 26' und das Luftzufuhrrohr 18 sind in der Bodenöffnung 22 und in der Öffnung 36' des Verschlußdeckels 13 frei verschiebbar gelagert. Ein weiterer Unterschied besteht darin, daß an die Wasseraustrittsöffnungen 31' des Schwimmgehäuses 10' nach unten in das Gewässer 17 ragende Rohre 40 angeschlossen sind, deren Öffnungen 41 hier mit unterschiedlichen Abständen vom Boden 11 des Schwimmgehäuses 10' enden. Durch diese Rohre 40 wird das ausfließende Wasser in tiefere Schichten des Gewässers zurückgeleitet. Das Ausführungsbeispiel nach Fig. 2 wird bevorzugt bei tieferen Gewässern eingesetzt.

**Patentansprüche**

1. Anordnung zur Reinigung und Belüftung von offenen Gewässern, gekennzeichnet durch ein Schwimmgehäuse (10), das teilweise über den Wasserspiegel (16) herausragt, in dessen unterem Bereich mindestens eine Öffnung (28, 29) zum Eintritt des Wassers vorhanden ist und in dessen oberem Bereich mittels eines Ventilators (15) ein Unterdruck erzeugbar ist, und dadurch gekennzeichnet, daß innerhalb des Schwimmgehäuses (10) ein ihm gegenüber höhenverstellbarer Luftaufnahmeraum (19) ausgebildet ist, der nach oben durch eine unterhalb des sich im Schwimmgehäuse (10) einstellenden Wasserspiegels (16') liegende Düsenplatte (20) begrenzt ist und in welchem eine Luft- oder andere Gaszuleitung (18) endet.

2. Anordnung nach Anspruch 1, dadurch gekennzeichnet, daß der Luftaufnahmeraum (19') zur automatischen Höheneinstellung als im Schwimmgehäuse (10) geführter Schwimmkörper ausgebildet ist.

3. Anordnung nach Anspruch 1 oder 2, dadurch gekennzeichnet, daß die Düsenplatte (20) eine zentrale Öffnung aufweist, an welche für die Gaszuleitung ein im Verschlußdeckel (13) des Schwimmgehäuses (10) geführtes Rohr (18) angeschlossen ist.

4. Anordnung nach Anspruch 3, dadurch gekennzeichnet, daß das Rohr (18') an denn Verschlußdeckel (13) feststellbar gelagert ist.

5. Anordnung nach einem der Ansprüche 1 bis 4, dadurch gekennzeichnet, daß der Luftaufnahmeraum (16) im oberen Teil eines Rohrkörpers (26) ausgebildet ist, der unten offen ist und in dessen unterem Teil ein Filtereinsatz (27) angeordnet ist.

6. Anordnung nach einem der Ansprüche 1 bis 5, dadurch gekennzeichnet, daß das Schwimmgehäuse (10) einen Boden (11) aufweist, der eine zentrale Öffnung (22) für die Führung des den Luftaufnahmeraum (19) aufweisenden Rohrkörpers (26) und radial außerhalb davon Öffnungen (31) für einen Wasserauslaß aufweist.

7. Anordnung nach Anspruch 6, dadurch gekennzeichnet, daß an die Wasserauslaßöffnungen (31') nach unten in das Gewässer (17) führende und mit größerem Abstand vom Boden (11) endende Rohre (40) angeschlossen sind.

8. Anordnung nach einem der Ansprüche 1 bis 7, dadurch gekennzeichnet, daß die Öffnungen zur Zuleitung von Wasser in das Innere des Schwimmgehäuses (10) als Düsenrohre (29) ausgebildet sind, die durch den Luftaufnahmeraum (19) und die Düsenplatte (20) hindurchgeführt sind.

9. Anordnung nach einem der Ansprüche 1 bis 8, dadurch gekennzeichnet, daß oberhalb der Düsenplatte (20) mit Abstand von und konzentrisch zu ihr ein Leitring (30) für das im Schwimmgehäuse (10) befindliche Wasser angeordnet ist.

10. Anordnung nach einem der Ansprüche 1 bis 9, dadurch gekennzeichnet, daß das Schwimmgehäuse (10) am Gewässerboden (32) verankerbar ist.

**Claims**

1. An arrangement for cleaning and aerating open stretches of water, characterised by a floating housing (10) which partially juts out above the water level (16), in the lower region of which at least one aperture (28, 29) for the entry of the water is present and in the upper region of which an underpressure can be produced by means of a fan (15), and characterised in that formed inside the floating housing (10) is an air reception chamber (19) which is adjustable in height relative to it and which is bounded upwardly by a nozzle plate (20) lying below the water level (16') occurring in the floating housing (10) and in which an air or other gas supply (18) ends.

2. An arrangement according to claim 1, characterised in that the air reception chamber (19') is designed for automatic height adjustment as a floating body which is guided in the floating housing (10).

3. An arrangement according to claim 1 or 2, characterised in that the nozzle plate (20) has a central aperture, to which a gas supply pipe (18), guided through the closure lid (13) of the floating housing (10), is connected.

4. An arrangement according to claim 3, characterised in that the pipe (18') is mounted so as to be securable on the closure lid (13).

5. An arrangment according to one of claims 1 to 4, characterised in that the air reception chamber (19) is formed in the upper part of a tube body (26) which is open at the bottom and in the lower part of which a filter element (27) is arranged.

6. An arrangement according to one of claims 1 to 5, characterised in that the floating housing (10) has a base (11) which has a central aperture (22) for location of the tube body (26) having the air reception chamber (19) and, radially outwardly thereof, apertures (31) for a water outlet.

7. An arrangement according to claim 6, characterised in that connected to the water outlet apertures (31') are pipes (40) which lead downwardly into the stretch of water (17) and which end at a substantial distance from the base (11).

8. An arrangement according to one of claims 1 to 7, characterised in that the apertures for the supply of water into the interior of the floating housing (10) are designed as nozzle pipes (29) which extend through the air reception chamber (19) and the nozzle plate (20).

9. An arrangement according to one of claims 1 to 8, characterised in that arranged above the nozzle plate (20) at a spacing therefrom and concentrically thereto is a guide ring (30) for the water which is present in the floating housing (10).

10. An arrangement according to one of claims 1 to 9, characterised in that the floating housing (10) can be anchored to the bottom (32) of the stretch of water.


**Revendications**

1. Dispositif pour l'épuration et l'aération des eaux ouvertes, caractérisé par un boîtier flottant (10) qui dépasse partiellement au-dessus du niveau d'eau (16), dans la zone inférieure duquel est prévue une ouverture (28,29) au moins pour l'entrée de l'eau et dans la zone supérieure duquel une dépression peut être générée au moyen d'un ventilateur (15), et caractérisé en ce qu'à l'intérieur du boîtier flottant (10) est prévu un espace de réception d'air (19) réglable en hauteur par rapport à celui-ci, qui est limité vers le haut par une plaque à buses (20) située au-dessous du niveau d'eau (16') se réglant dans le boîtier flottant (10) et dans laquelle débouche une tuyauterie d'arrivée d'air ou d'un autre gaz (18).

2. Dispositif selon la revendication 1, caractérisé en ce que l'espace de réception d'air (19') pour le réglage automatique de la hauteur est conçu comme un flotteur guidé dans le boîtier flottant (10).

3. Dispositif selon la revendication 1 ou 2, caractérisé en ce que la plaque à buses (20) présente une ouverture centrale à laquelle est raccordé un tube (18) guidé dans le couvercle d'obturation (13) pour la tuyauterie d'arrivée de gaz.

4. Dispositif selon la revendication 3, caractérisé en ce que le tube (18') est monté contrôlable sur le couvercle d'obturation (13).

5. Dispositif selon l'une des revendications 1 à 4, caractérisé en ce que l'espace de réception d'air (16) est prévu dans la partie supérieure d'un corps de tube (26) qui est ouvert en bas et dans la partie inférieure duquel est disposé une cartouche filtrante (27).

6. Dispositif selon l'une des revendications 1 à 5, caractérisé en ce que le boîtier flottant (10) présente un fond (11) qui présente une ouverture centrale (22) pour le guidage du corps de tube (26) présentant l'espace de réception d'air (19) et radialement à l'extérieur de celui-ci des ouvertures (31) pour une évacuation de l'eau.

7. Dispositif selon la revendication 6, caractérisé en ce que des tubes (40) conduisant vers le bas dans les eaux (17) et débouchant à une distance assez grande du fond (11) sont raccordés aux ouvertures d'évacuation de l'eau (31').

8. Dispositif selon l'une des revendications 1 à 7, caractérisé en ce que les ouvertures pour l'arrivée de l'eau dans l'intérieur du boîtier flottant (10) sont conçues comme des tubes à buses (29) qui sont conduits à travers l'espace de réception d'air (19) et la plaque à buses (20).

9. Dispositif selon l'une des revendications 1 à 8, caractérisé en ce qu'un anneau directeur (30) est disposé au-dessus de la plaque à buses (20) à distance de et concentrique à celle-ci pour l'eau se trouvant dans le boîtier flottant (10).

10. Dispositif selon l'une des revendications 1 à 9, caractérisé en ce que le boîtier flottant (10) peut être ancré au fond des eaux (32).

FIG.1

FIG.2